# EUROPEAN PATENT SPECIFICATION

(11) **EP 4 206 237 B1**
(45) Date of publication and mention of the grant of the patent: **22.10.2025**
(21) Application number: 21861061.6
(22) Date of filing: 21.07.2021
(51) Int. Cl.: C08F 8/42, C08F 12/00, C08F 36/04, C08L 25/00, C08L 47/00

(54) **POLYMER COMPOSITION INCLUDING MODIFIED POLYMERS HAVING BORON-CONTAINING FUNCTIONAL GROUP, AND METHOD FOR PRODUCTION THEREOF**
POLYMERZUSAMMENSETZUNG MIT MODIFIZIERTEN POLYMEREN MIT EINER BORHALTIGEN FUNKTIONELLEN GRUPPE UND VERFAHREN ZUR HERSTELLUNG DAVON
COMPOSITION POLYMÈRE CONTENANT DES POLYMÈRES MODIFIÉS AYANT UN GROUPE FONCTIONNEL CONTENANT DU BORE, ET PROCÉDÉ DE PRODUCTION ASSOCIÉ

(30) Priority: 31.08.2020 JP 2020145881
(43) Date of publication of application: 05.07.2023
(73) Proprietor: Kuraray Co., Ltd., Kurashiki-shi, Okayama 710-0801 (JP)
(72) Inventor: INATOMI, Atsushi, Tsukuba-shi, Ibaraki 305-0841 (JP); KARAKIDA, Takuro, Tsukuba-shi, Ibaraki 305-0841 (JP); FUKUHARA, Tadahito, Tsukuba-shi, Ibaraki 305-0841 (JP); OHTA, Satomi, Kamisu-shi, Ibaraki 314-0197 (JP)
(74) Representative: Müller-Boré & Partner Patentanwälte PartG mbB
(86) International application number: PCT/JP2021/027320
(87) International publication number: WO 2022/044633

(56) References cited:
- CN-A- 111 378 165
- JP-A- 2014 523 939
- JP-A- H0 733 820
- JP-A- H06 340 783

## Description

### Technical Field

The present invention relates to a polymer composition including modified polymers having a boron-containing functional group, and to a production method.

### Background Art

Research is underway on methods for synthesizing polymers having various functional groups, for example, boron-containing functional groups, at terminals by anionic polymerization. For example, methods are studied in which a boronic acid group as an example of the boron-containing functional groups is introduced at a polymer terminal. It has been revealed that polymers terminated with a boronic acid group or a borinic acid group as a boron-containing functional group are useful as resin modifiers, for example, compatibilizers for thermoplastic resins having a hydroxyl group at a side chain, such as ethylene-vinyl alcohol copolymers (see Patent Literature 1). Furthermore, borinic acid group-modified polymers composed of polymers of at least one kind of styrene monomer and diene monomer are studied for use in tires for the purpose of improving the dispersibility of silica (see Patent Literature 2).

### Citation List

### Patent Literature

Patent Literature 1: JP-A-H07-25918
Patent Literature 2: WO 2014/088092

### Summary of Invention

### Technical Problem

Specifically, Patent Literature 1 contemplates obtaining a conjugated diene polymer terminated with boronic acid by reacting an active terminal of an anionically polymerized polymer with trimethyl borate. However, studies by the present inventors have found that while the method of Patent Literature 1 can produce a conjugated diene polymer terminated with boronic acid, the reactivity of the boric acid ester in the production method is insufficient and the product may include a large amount of an unmodified polymer having no boronic acid groups. Because the polymer having a boronic acid group represents a low proportion, that is, a large proportion of the polymer cannot react with a polymer that has a group reactive with the boronic acid group, treatment such as resin modification with the polymer obtained in Patent Literature 1 may result in problems such as insufficient graft efficiency or an increased amount of bleed-out components.

Patent Literature 2 describes that a conjugated diene polymer having a borinic acid group at a polymer terminal has an effect of enhancing silica dispersibility. According to a method described in Patent Literature 2, a polymer-based composition including only a borinic acid group-modified polymer can be obtained in a high yield. Borinic acid has a high Lewis acidity and is excellent in reactivity with Lewis basic compounds, but easily generates protons in the presence of water to cause a decrease in storage stability of conjugated diene polymers. Furthermore, the terminal that is produced in the method described in Patent Literature 2 includes a low-molecular boronic acid oligomer that reacts competitively with the polymer to cause problems in some cases, such as a decrease in graft efficiency.

The present invention has been made in light of the circumstances discussed above. Objects of the present invention are therefore to provide a production method capable of giving, in a high yield, polymers having a boron-containing functional group that are suited for modification of various materials such as modification of polar materials and dispersing of inorganic materials, and to provide a polymer composition that includes modified polymers with a boron-containing functional group, and exhibits high reactivity with respect to various polar functional groups and attains excellent storage stability (for example, heat resistance) at the same time.

### Solution to Problem

After extensive studies, the present inventors have found that desired polymers having a boron-containing functional group can be obtained in a high yield by using, in the polymer production process, a predetermined polymer having an anionic polymerization active terminal, and a boric acid compound satisfying a predetermined parameter. The present inventors have further found that a specific polymer composition that includes a modified polymer containing a predetermined boronic acid ester group, and a modified polymer containing a predetermined borinic acid group exhibits high reactivity with respect to polar functional groups and attains excellent storage stability. The present invention has been completed based on the findings.

Specifically, the present invention provides the following [1] to [3].
[1] A method for producing a polymer composition including modified polymers having a boron-containing functional group, the method comprising a step (1) of anionically polymerizing at least one monomer selected from the group consisting of conjugated dienes and aromatic vinyl compounds in the presence of an active metal or an active metal compound capable of catalyzing anionic polymerization to produce a terminal-active polymer (Z), and a step (2) of reacting the terminal-active polymer (Z) obtained in the step (1) with a boric acid compound having at least two or more partial structures represented by the formula (I) below and having a Taft's steric parameter Es of -0.30 or less with respect to at least one of Rs bonded to the oxygen atom in the partial structures,

   B-O-R (I)

   (in the formula (I), B denotes a boron atom, O denotes an oxygen atom, and R denotes an organic group).
[2] The method for producing a polymer composition described in [1], wherein the step (2) comprises mixing a polar compound with the boric acid compound, and adding the mixture to the terminal-active polymer (Z) followed by reaction.
[3] A polymer composition comprising:
   55 to 99 mass% of at least one type of a boronic modified polymer (A) selected from the group consisting of modified polymers containing a boronic acid group and represented by the formula (II) below, modified polymers containing a boronic acid ester group and represented by the formula (III) below, and modified polymers containing a boronic acid salt group and represented by the formula (IV) below; and
   1 to 45 mass% of at least one type of a borinic modified polymer (B) selected from the group consisting of modified polymers containing a borinic acid group and represented by the formula (V) or (VI) below, modified polymers containing a borinic acid ester group and represented by the formula (VII) or (VIII) below, and modified polymers containing a borinic acid salt group and represented by the formula (IX) or (X) below, 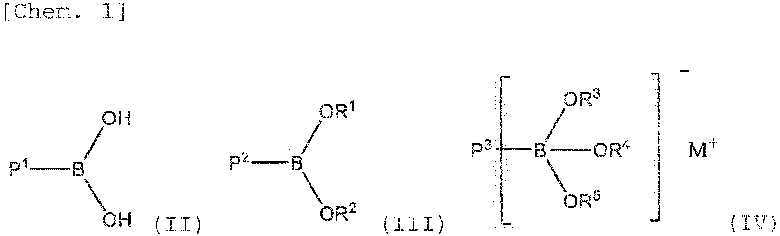
   (wherein P¹, P² and P³ each denote a polymer chain containing at least one monomer unit selected from the group consisting of conjugated diene units and aromatic vinyl compound units,
   R¹ and R² each independently denote a hydrogen atom or a C1-C12 alkyl group, and at least one of R¹ and R² is a C1-C12 alkyl group, or R¹ and R² are bonded to each other to form a C2-C24 alkylene chain,
   R³, R⁴ and R⁵ each independently denote a hydrogen atom, a C1-C12 alkyl group, or a polymer chain containing at least one monomer unit selected from the group consisting of conjugated diene units and aromatic vinyl compound units, and at least one of R³, R⁴ and R⁵ is a C1-C12 alkyl group, or a polymer chain containing at least one monomer unit selected from the group consisting of conjugated diene units and aromatic vinyl compound units, or R³ and R⁴, R³ and R⁵, or R⁴ and R⁵ are optionally bonded to each other to form a C2-C24 alkylene chain, or R³, R⁴ and R⁵ are optionally bonded to one another to form a C3-C36 trivalent saturated hydrocarbon chain, and M denotes one alkali metal or 1/2 alkaline earth metal) 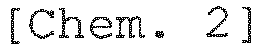 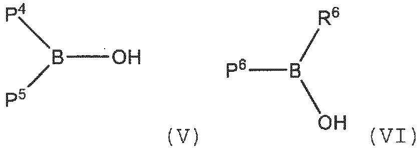 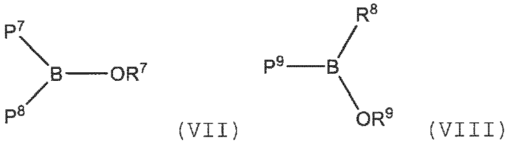 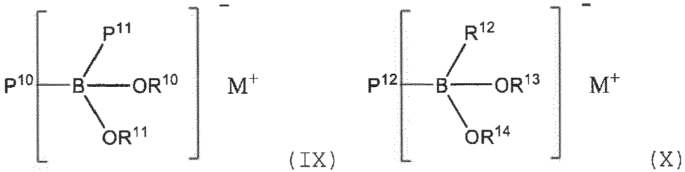
   (wherein P⁴, P⁵, P⁶, P⁷, P⁸, p⁹, P¹⁰, P¹¹ and P¹² each denote a polymer chain containing at least one monomer unit selected from the group consisting of conjugated diene units and aromatic vinyl compound units,
   R⁶, R⁷, R⁸ and R⁹ each independently denote a C1-C12 alkyl group,
   R¹⁰ and R¹¹ are each independently a hydrogen atom or a C1-C12 alkyl group, and at least one of R¹⁰ and R¹¹ is a C1-C12 alkyl group, or R¹⁰ and R¹¹ are bonded to each other to form a C2-C24 alkylene chain,
   R¹² denotes a C1-C12 alkyl group,
   R¹³ and R¹⁴ are each independently a hydrogen atom or a C1-C12 alkyl group, and at least one of R¹³ and R¹⁴ is a C1-C12 alkyl group, or R¹³ and R¹⁴ are bonded to each other to form a C2-C24 alkylene chain, and
   M denotes one alkali metal or 1/2 alkaline earth metal).

### Advantageous Effects of Invention

The polymer composition provided according to the present invention includes a modified polymer containing a boronic acid ester group and a modified polymer containing a borinic acid group, and exhibits high reactivity with respect to polar functional groups and attains excellent storage stability (for example, heat resistance) at the same time. The method for producing the polymer composition is also provided.

### Description of Embodiments

Hereinbelow, the present invention will be described in detail.

A polymer composition of the present invention includes:
55 to 99 mass% of at least one type of a boronic modified polymer (A) selected from the group consisting of modified polymers containing a boronic acid group and represented by the formula (II) below, modified polymers containing a boronic acid ester group and represented by the formula (III) below, and modified polymers containing a boronic acid salt group and represented by the formula (IV) below; and
1 to 45 mass% of at least one type of a borinic modified polymer (B) selected from the group consisting of modified polymers containing a borinic acid group and represented by the formula (V) or (VI) below, modified polymers containing a borinic acid ester group and represented by the formula (VII) or (VIII) below, and modified polymers containing a borinic acid salt group and represented by the formula (IX) or (X) below.

In the present invention, the modified polymers containing a boronic acid group are represented by the formula (II) below:

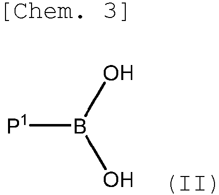

In the formula (II), P¹ denotes a polymer chain containing at least one monomer unit selected from the group consisting of conjugated diene units and aromatic vinyl compound units.

In the present invention, the modified polymers containing a boronic acid ester group are represented by the formula (III) below:

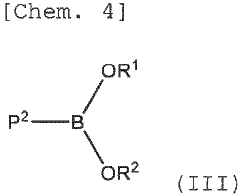

In the formula (III), P² denotes a polymer chain containing at least one monomer unit selected from the group consisting of conjugated diene units and aromatic vinyl compound units. R¹ and R² each independently denote a hydrogen atom or a C1-C12 alkyl group. At least one of R¹ and R² is a C1-C12 alkyl group, or R¹ and R² are bonded to each other to form a C2-C24 alkylene chain.

At least one of R¹ and R² preferably has a Taft's steric parameter Es of -0.30 or less, more preferably -3.00 to -0.30, and still more preferably -1.55 to -0.39. In a preferred embodiment, both R¹ and R² satisfy the above Es value. At least one of R¹ and R² is preferably an n-propyl group, an isopropyl group, an n-butyl group, a sec-butyl group, an i-butyl group or a cyclohexyl group, more preferably an isopropyl group or an n-butyl group, and still more preferably an isopropyl group. Furthermore, R¹ and R² are each preferably an n-propyl group, an isopropyl group, an n-butyl group, a sec-butyl group, an i-butyl group or a cyclohexyl group, more preferably an isopropyl group or an n-butyl group, and still more preferably an isopropyl group. The Taft's steric parameter Es will be described later in the section of a step (2) of a preferred method for producing the polymer composition.

In the present invention, the modified polymers containing a boronic acid salt group are represented by the formula (IV) below:

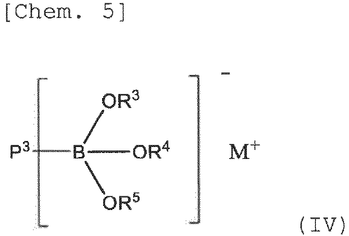

In the formula (IV), P³ denotes a polymer chain containing at least one monomer unit selected from the group consisting of conjugated diene units and aromatic vinyl compound units. R³, R⁴ and R⁵ each independently denote a hydrogen atom, a C1-C12 alkyl group, or a polymer chain containing at least one monomer unit selected from the group consisting of conjugated diene units and aromatic vinyl compound units. At least one of R³, R⁴ and R³ is a C1-C12 alkyl group, or a polymer chain containing at least one monomer unit selected from the group consisting of conjugated diene units and aromatic vinyl compound units. Alternatively, R³ and R⁴, R³ and R⁵, or R⁴ and R⁵ may be bonded to each other to form a C2-C24 alkylene chain, or R³, R⁴ and R⁵ may be bonded to one another to form a C3-C36 trivalent saturated hydrocarbon chain.

At least one of R³, R⁴ and R⁵ preferably has a Taft's steric parameter Es of -0.30 or less, more preferably -3.00 to -0.30, and still more preferably -1.55 to -0.39. In a preferred embodiment, all of R³, R⁴ and R⁵ satisfy the above Es value. At least one of R³, R⁴ and R⁵ is preferably an n-propyl group, an isopropyl group, an n-butyl group, a sec-butyl group, an i-butyl group or a cyclohexyl group, more preferably an isopropyl group or an n-butyl group, and still more preferably an isopropyl group. Furthermore, R³, R⁴ and R⁵ are each preferably an n-propyl group, an isopropyl group, an n-butyl group, a sec-butyl group, an i-butyl group or a cyclohexyl group, more preferably an isopropyl group or an n-butyl group, and still more preferably an isopropyl group. M is one alkali metal or 1/2 alkaline earth metal, preferably lithium, sodium or potassium, and more preferably lithium. Incidentally, the formula (IX) includes a single monovalent anion group indicated in square brackets, and the valence of an alkali metal cation is monovalent. Therefore, one alkali metal means that the number of alkali metal atom is one corresponding to the valence of the anion group. Similarly, the formula (IX) includes a single monovalent anion group indicated in square brackets, and the valence of an alkaline earth metal cation is divalent. Therefore, 1/2 alkaline earth metal means that the number of alkaline earth metal atom is 1/2 corresponding to the valence of the anion group.

In the present invention, the modified polymers containing a borinic acid group are represented by the formula (V) or the formula (VI) below:

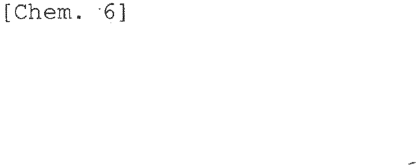

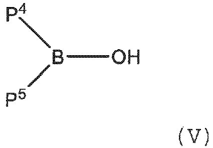

In the formula (V), P⁴ and P⁵ each denote a polymer chain containing at least one monomer unit selected from the group consisting of conjugated diene units and aromatic vinyl compound units.

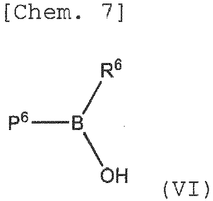

In the formula (VI), P⁶ denotes a polymer chain containing at least one monomer unit selected from the group consisting of conjugated diene units and aromatic vinyl compound units, and R⁶ denotes a C1-C12 alkyl group. R⁶ is preferably a methyl group, an ethyl group, an n-propyl group, an isopropyl group, an n-butyl group, a sec-butyl group, an i-butyl group or a cyclohexyl group, more preferably an isopropyl group or an n-butyl group, and still more preferably an isopropyl group.

In the present invention, the modified polymers containing a borinic acid ester group are represented by the formula (VII) or the formula (VIII) below:

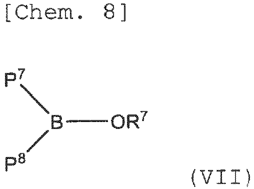

In the formula (VII), P⁷ and P⁸ each denote a polymer chain containing at least one monomer unit selected from the group consisting of conjugated diene units and aromatic vinyl compound units, and R⁷ denotes a C1-C12 alkyl group. R⁷ preferably has a Taft's steric parameter Es of -0.30 or less, more preferably -3.00 to -0.30, and still more preferably - 1.55 to -0.39. R⁷ is preferably an n-propyl group, an isopropyl group, an n-butyl group, a sec-butyl group, an i-butyl group or a cyclohexyl group, more preferably an isopropyl group or an n-butyl group, and still more preferably an isopropyl group.

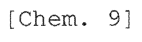

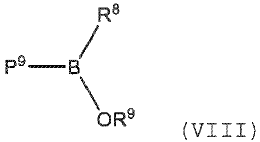

In the formula (VIII), P⁹ denotes a polymer chain containing at least one monomer unit selected from the group consisting of conjugated diene units and aromatic vinyl compound units, R⁸ is a C1-C12 alkyl group, and R⁹ is a C1-C12 alkyl group. R⁹ preferably has a Taft's steric parameter Es of -0.30 or less, more preferably -3.00 to -0.30, and still more preferably -1.55 to -0.39. R⁹ is preferably an n-propyl group, an isopropyl group, an n-butyl group, a sec-butyl group, an i-butyl group or a cyclohexyl group, more preferably an isopropyl group or an n-butyl group, and still more preferably an isopropyl group.

R⁸ is preferably a methyl group, an ethyl group, an n-propyl group, an isopropyl group, an n-butyl group, a sec-butyl group, an i-butyl group or a cyclohexyl group, more preferably an isopropyl group or an n-butyl group, and still more preferably an isopropyl group.

In the present invention, the modified polymers containing a borinic acid salt group are represented by the formula (IX) or the formula (X) below:

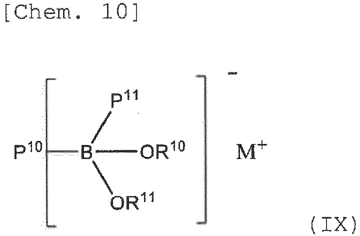

In the formula (IX), P¹⁰ and P¹¹ each denote a polymer chain containing at least one monomer unit selected from the group consisting of conjugated diene units and aromatic vinyl compound units. R¹⁰ and R¹¹ are each independently a hydrogen atom or a C1-C12 alkyl group. At least one of R¹⁰ and R¹¹ is a C1-C12 alkyl group, or R¹⁰ and R¹¹ are bonded to each other to form a C2-C24 alkylene chain. M denotes one alkali metal or 1/2 alkaline earth metal.

At least one of R¹⁰ and R¹¹ preferably has a Taft's steric parameter Es of -0.30 or less, more preferably -3.00 to -0.30, and still more preferably -1.55 to -0.39. In a preferred embodiment, both R¹⁰ and R¹¹ satisfy the above Es value. At least one of R¹⁰ and R¹¹ is preferably an n-propyl group, an isopropyl group, an n-butyl group, a sec-butyl group, an i-butyl group or a cyclohexyl group, more preferably an isopropyl group or an n-butyl group, and still more preferably an isopropyl group. Furthermore, R¹⁰ and R¹¹ are each preferably an n-propyl group, an isopropyl group, an n-butyl group, a sec-butyl group, an i-butyl group or a cyclohexyl group, more preferably an isopropyl group or an n-butyl group, and still more preferably an isopropyl group. M is one alkali metal or 1/2 alkaline earth metal, preferably lithium, sodium or potassium, and more preferably lithium.

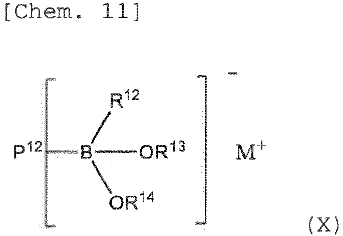

In the formula (X), P¹² denotes a polymer chain containing at least one monomer unit selected from the group consisting of conjugated diene units and aromatic vinyl compound units. R¹² denotes a C1-C12 alkyl group.

R¹³ and R¹⁴ are each independently a hydrogen atom or a C1-C12 alkyl group. At least one of R¹³ and R¹⁴ is a C1-C12 alkyl group, or R¹³ and R¹⁴ are bonded to each other to form a C2-C24 alkylene chain.

M denotes one alkali metal or 1/2 alkaline earth metal.

At least one of R¹³ and R¹⁴ preferably has a Taft's steric parameter Es of -0.30 or less, more preferably -3.00 to -0.30, and still more preferably -1.55 to -0.39. In a preferred embodiment, both R¹³ and R¹⁴ satisfy the above Es value. At least one of R¹³ and R¹⁴ is preferably an n-propyl group, an isopropyl group, an n-butyl group, a sec-butyl group, an i-butyl group or a cyclohexyl group, more preferably an isopropyl group or an n-butyl group, and still more preferably an isopropyl group. Furthermore, R¹³ and R¹⁴ are each preferably an n-propyl group, an isopropyl group, an n-butyl group, a sec-butyl group, an i-butyl group or a cyclohexyl group, more preferably an isopropyl group or an n-butyl group, and still more preferably an isopropyl group.

R¹² is preferably a methyl group, an ethyl group, an n-propyl group, an isopropyl group, an n-butyl group, a sec-butyl group, an i-butyl group or a cyclohexyl group, more preferably an isopropyl group or an n-butyl group, and still more preferably an isopropyl group.

M is preferably lithium, sodium or potassium, and more preferably lithium.

As described hereinabove, the formulas (II) to (X) contain P¹ to P¹² that each denote a polymer chain containing at least one monomer unit selected from the group consisting of conjugated diene units and aromatic vinyl compound units.

Examples of the conjugated dienes that may give conjugated diene units in P¹ to P¹² include butadiene, isoprene, 2,3-dimethylbutadiene, 2-phenylbutadiene, 1,3-pentadiene, 2-methyl-1,3-pentadiene, 1,3-hexadiene, 1,3-octadiene, 1,3-cyclohexadiene, 2-methyl-1,3-octadiene, 1,3,7-octatriene, myrcene, farnesene and chloroprene. Among these conjugated dienes, butadiene and isoprene are preferable, and butadiene is more preferable. The conjugated dienes for forming the conjugated diene units may be used singly, or two or more may be used in combination.

Examples of the aromatic vinyl compounds that may give aromatic vinyl compound units in P¹ to P¹² include styrene, α-methylstyrene, 2-methylstyrene, 3-methylstyrene, 4-methylstyrene, 4-propylstyrene, 4-t-butylstyrene, 4-cyclohexylstyrene, 4-dodecylstyrene, 2,4-dimethylstyrene, 2,4-diisopropylstyrene, 2,4,6-trimethylstyrene, 2-ethyl-4-benzylstyrene, 4-(phenylbutyl)styrene, 1-vinylnaphthalene, 2-vinylnaphthalene, vinylanthracene, N,N-diethyl-4-aminoethylstyrene, vinylpyridine, 4-methoxystyrene, monochlorostyrene, dichlorostyrene and divinylbenzene. Among these aromatic vinyl compounds, styrene, α-methylstyrene and 4-methylstyrene are preferable. The aromatic vinyl compounds for forming the aromatic vinyl compound units may be used singly, or two or more may be used in combination.

In a preferred embodiment, units of at least one monomer selected from the group consisting of butadiene and isoprene represent 30 mass% or more of all the monomer units constituting any of the polymer chains P¹ to P¹². The total content of butadiene units and isoprene units is preferably 50 to 100 mass%, and more preferably 60 to 100 mass% of all the monomer units constituting the polymer chain P¹.

The content of monomer units other than the butadiene units and the isoprene units is preferably 50 mass% or less, and more preferably 40 mass% or less of all the monomer units constituting any of the polymer chains P¹ to P¹².

Examples of the polymer chains P¹ to P¹² include homopolymer chains or copolymer chains (random copolymer chains, block copolymer chains) of at least one monomer selected from monomers selected from the group consisting of the conjugated dienes and the aromatic vinyl compounds described above, and copolymer chains (random copolymer chains, block copolymer chains) containing units from the monomers described above and other monomers.

In a preferred embodiment, the weight average molecular weight (Mw) of the polymer chains P¹ to P¹² is 1,000 or more and 1,000,000 or less, more preferably 2,000 or more and 500,000 or less, and still more preferably 3,000 or more and 100,000 or less. Furthermore, it is preferable that the weight average molecular weight (Mw) of the polymer composition of the present invention also fall in the above range. When the Mw of the polymer chain is in the above range, the production tends to benefit from excellent process flow efficiency and attain good economic efficiency. In the present invention, the Mw is a weight average molecular weight measured by gel permeation chromatography (GPC) relative to standard polystyrenes unless otherwise specified.

The molecular weight distribution (Mw/Mn) of the polymer chains P¹ to P¹² is preferably 1.0 to 20.0, more preferably 1.0 to 10.0, still more preferably 1.0 to 5.0, even more preferably 1.0 to 2.0, further preferably 1.0 to 1.5, are particularly preferably 1.0 to 1.2. When the Mw/Mn is in the above range, the modified polymers that are obtained advantageously have a small variation in viscosity. Furthermore, it is preferable that the molecular weight distribution (Mw/Mn) of the polymer composition of the present invention also fall in the above range, for the reason that the variation in viscosity is reduced. In the present invention, Mn means a number average molecular weight, and the Mn is a number average molecular weight measured by GPC relative to standard polystyrenes. Furthermore, the molecular weight distribution (Mw/Mn) means the ratio (Mw/Mn) of the weight average molecular weight (Mw) to the number average molecular weight (Mn) according to GPC relative to standard polystyrenes.

The vinyl content in the polymer chains P¹ to P¹² is not particularly limited, but is preferably 90 mol% or less, more preferably 0.01 to 90 mol%, still more preferably 0.1 to 80 mol%, and even more preferably 1 to 70 mol%. Furthermore, it is preferable that the vinyl content in the polymer composition of the present invention also fall in the above range. In the present invention, the "vinyl content" means the total mol% of conjugated diene units that are 1,2-bonded, 3,4-bonded (in the case of other than farnesene) and 3,13-bonded (in the case of farnesene) (conjugated diene units that are bonded by other than 1,4-bonding (in the case of other than farnesene) and 1,13-bonding (in the case of farnesene)) in all the conjugated diene units in the polymer chain or the polymer taken as 100 mol%. The vinyl content is calculated from the area ratio of ¹H-NMR peaks assigned to conjugated diene units that are 1,2-bonded, 3,4-bonded (in the case of other than farnesene) and 3,13-bonded (in the case of farnesene), and ¹H-NMR peaks assigned to conjugated diene units that are 1,4-bonded (in the case of other than farnesene) and 1,13-bonded (in the case of farnesene)).

The vinyl content in the polymers of the polymer chains P¹ to P¹² may be designed in accordance with the purpose. When, for example, the vinyl content is less than 70 mol%, the glass transition temperature (Tg) of the polymer tends to be low, and the polymer composition that is obtained tends to be excellent in fluidity and low-temperature characteristics.

When, for example, the polymer composition of the present invention is produced by the method described later, the vinyl content may be brought to a desired value by controlling factors such as the type of a solvent used in the step (1), a polar compound used as required, and the polymerization temperature.

The glass transition temperature (Tg) of the polymer chains P¹ to P¹² is variable depending on factors such as the vinyl contents in butadiene units, isoprene units, and conjugated diene units other than butadiene units and isoprene units, the types of the conjugated diene units, and the content of units derived from monomers other than conjugated dienes, but is preferably -150 to 50°C, more preferably -130 to 50°C, and still more preferably -130 to 30°C. When the Tg is in the above range, for example, an increase in viscosity can be suppressed and handling is facilitated. Furthermore, it is preferable that the glass transition temperature (Tg) of the polymer composition of the present invention also fall in the above range from the point of view of easy handling. In the present invention, the Tg is a value at the DDSC peak top determined by differential scanning calorimetry (DSC) measurement.

The polymer composition of the present invention is characterized by including, based on the mass of all the polymers contained in the composition:
55 to 99 mass% of at least one type of a boronic modified polymer (A) selected from the group consisting of modified polymers containing a boronic acid group and represented by the formula (II), modified polymers containing a boronic acid ester group and represented by the formula (III), and modified polymers containing a boronic acid salt group and represented by the formula (IV); and
1 to 45 mass% of at least one type of a borinic modified polymer (B) selected from the group consisting of modified polymers containing a borinic acid group and represented by the formula (V) or (VI), modified polymers containing a borinic acid ester group and represented by the formula (VII) or (VIII), and modified polymers containing a borinic acid salt group and represented by the formula (IX) or (X).

By including the boronic modified polymer (A) and the borinic modified polymer (B) in the above proportions, the polymer composition of the present invention can concurrently exhibit high reactivity with respect to polar functional groups and attain excellent storage stability. Incidentally, the polymer composition of the present invention is typically a mixture of the polymers modified with a boron-containing functional group, and unmodified polymers that have remained unmodified after the functional group modification. Thus, the polymer composition according to a preferred embodiment of the present invention consists solely of a mixture of the polymers modified with a boron-containing functional group, and unmodified polymers that have remained unmodified after the functional group modification.

The contents of the boronic modified polymer (A) and the borinic modified polymer (B) in the polymer composition may be determined from the boron concentration in the polymer composition and a ¹¹B-NMR spectrum. The boron concentration may be determined by ICP emission spectrometry, and the contents of (A) and (B) are calculated from the area ratio of the signals in a ¹¹B-NMR spectrum. When the polymer composition is obtained using a boric acid ester compound, (B) exhibits a higher molecular weight than (A), and thus the contents of (A) and (B) are calculated also from the area ratio in a GPC chart. If the resolution of peaks is low, the area ratio is calculated by separating the peaks assuming that the peaks obey the Gaussian distribution.

To ensure that the polymer composition attains higher stability, the content proportions of the boronic modified polymer (A) and the borinic modified polymer (B) in the polymer composition of the present invention are preferably such that the boronic modified polymer (A) represents 65 to 99 mass% and the borinic modified polymer (B) represents 1 to 35 mass%, more preferably such that the boronic modified polymer (A) represents 68 to 99 mass% and the borinic modified polymer (B) represents 1 to 32 mass%, still more preferably such that the boronic modified polymer (A) represents 79 to 99 mass% and the borinic modified polymer (B) represents 1 to 31 mass%, and particularly preferably such that the boronic modified polymer (A) represents 80 to 99 mass% and the borinic modified polymer (B) represents 1 to 20 mass%.

The content proportions of the boronic modified polymer (A) and the borinic modified polymer (B) in the polymer composition of the present invention may be controlled by, for example, controlling factors such as the Taft's steric parameter Es, the reaction temperature and the amount of a polar compound in the method for producing the modified polymers described later.

The Mw of the boronic modified polymer (A) is preferably 2,000 or more and 200,000 or less, and more preferably 4,000 or more and 100,000 or less.

The Mw of the borinic modified polymer (B) is preferably 4,000 or more and 400,000 or less, and more preferably 8,000 or more and 200,000 or less.

The polymer composition of the present invention may further include at least one of a boron-crosslinked trimer (C) represented by the formula (XI) below and an unmodified polymer (D) having no boron-containing functional groups while still ensuring that the reactivity of the polymer composition is not impaired. The contents of (C) and (D) in the polymer composition are each preferably 20 mass% or less.

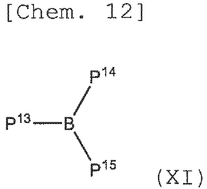

In the formula (XI), P¹³, P¹⁴ and P¹⁵ each denote a polymer chain containing at least one monomer unit selected from the group consisting of conjugated diene units and aromatic vinyl compound units.

In the polymer composition, the content of the modified polymers having a boron-containing functional group (typically, the modified polymers having a boron-containing functional group at a terminal) is preferably 60 mass% or more, and more preferably 65 mass% or more relative to the mass of all the polymers contained in the composition.

The boron content in the polymer composition may be measured by determining the boron content per weight of the polymer composition by ICP emission spectrometry.

To ensure that the polymer composition satisfies stability and reactivity at the same time, the boron content in the polymer composition is more preferably 0.001 to 5 mass%, and still more preferably 0.003 to 2 mass%.

The polymer composition of the present invention that includes the modified polymers having a boron-containing functional group is preferably produced by a method that includes a step (1) and a step (2) described below.

Step (1): At least one monomer selected from the group consisting of conjugated dienes and aromatic vinyl compounds is anionically polymerized in the presence of an active metal or an active metal compound capable of catalyzing anionic polymerization to produce a terminal-active polymer (hereinafter, also written as the "terminal-active polymer (Z)").

The description of specific examples and embodiments such as preferred embodiments of the monomers for forming monomer-derived structural units constituting the terminal-active polymer (Z), and the description of specific examples and preferred embodiments of the monomer-derived structural units contained in the terminal-active polymer (Z) are the same as the description regarding the polymer chains P¹ to P¹³ containing at least one monomer unit selected from the group consisting of conjugated diene units and aromatic vinyl compound units in the polymer composition.

The terminal-active polymer (Z) having an anionic polymerization active terminal may be produced by a known polymerization process. For example, the terminal-active polymer (Z) may be obtained by anionically polymerizing a monomer in a solvent that is inactive with respect to the polymerization terminal while using an active metal or an active metal compound as an initiator capable of catalyzing anionic polymerization in the presence of a polar compound as required.

The active metal or the active metal compound capable of catalyzing anionic polymerization is preferably an organic alkali metal compound, and more preferably an organolithium compound.

Examples of the active metals include alkali metals such as lithium, sodium and potassium; alkaline earth metals such as beryllium, magnesium, calcium, strontium and barium; and lanthanoid rare earth metals such as lanthanum and neodymium. Among these, alkali metals and alkaline earth metals are preferable, and alkali metals are more preferable.

The active metal compounds are preferably organic alkali metal compounds. Examples of the organic alkali metal compounds include organic monolithium compounds such as methyllithium, ethyllithium, n-butyllithium, sec-butyllithium, tert-butyllithium, pentyllithium, hexyllithium, phenyllithium and stilbenelithium; polyfunctional organolithium compounds such as dilithiomethane, dilithionaphthalene, 1,4-dilithiobutane, 1,4-dilithio-2-ethylcyclohexane and 1,3,5-trilithiobenzene; sodium naphthalene, and potassium naphthalene. Among these organic alkali metal compounds, organolithium compounds are preferable. Examples of the organolithium compounds include methyllithium, ethyllithium, n-butyllithium, sec-butyllithium, tert-butyllithium and pentyllithium.

Examples of the solvents include aliphatic hydrocarbons such as n-butane, n-pentane, isopentane, n-hexane, n-heptane and isooctane; alicyclic hydrocarbons such as cyclopentane, cyclohexane and methylcyclopentane; and aromatic hydrocarbons such as benzene, toluene and xylene.

The anionic polymerization may involve a polar compound. Polar compounds are usually used in anionic polymerization to control the microstructure (the vinyl content) of conjugated diene moieties without deactivating the reaction. Examples of the polar compounds include ether compounds such as dibutyl ether, tetrahydrofuran and ethylene glycol diethyl ether; tertiary amines such as tetramethylethylenediamine and trimethylamine; alkali metal alkoxides, and phosphine compounds. The polar compound is usually used in an amount of 0.01 to 1000 mol per mol of the organic alkali metal compound.

The temperature of the anionic polymerization is usually in the range of -80 to 150°C, preferably in the range of 0 to 100°C, and more preferably in the range of 10 to 90°C. The polymerization mode may be either batchwise or continuous.

Step (2): The terminal-active polymer (Z) is reacted with a boric acid compound having at least two or more partial structures represented by the formula (I) below (hereinbelow, the structures are also written as the partial structures (I)) and having a Taft's steric parameter Es of - 0.30 or less with respect to at least one of Rs bonded to the oxygen atom in the partial structures (I),

B-O-R (I)

(in the formula (I), B denotes a boron atom, O denotes an oxygen atom, and R denotes an organic group).

Here, the Taft's steric parameter Es indicates a relative rate based on the substituent effect of a methyl group on the esterification reaction rate of a substituted carboxylic acid under acidic conditions. This parameter is a general index for the steric bulkiness of a substituent. The present invention includes the Es (Taft) values listed in Table 1 described in Tetrahedron, 1978, vol. 34, pp. 3553-3562, and values measured by a method conforming to the method described in the above literature. Based on the value of a methyl group taken as 0.0, for example, the value of a hydrogen atom is 1.24, the value of an ethyl group is -0.08, the value of an n-propyl group is -0.36, the value of an isopropyl group is -0.47, the value of an n-butyl group is - 0.39, the value of a sec-butyl group is -1.13, the value of an i-butyl group is -0.93, the value of a t-butyl group is - 1.54, and the value of a cyclohexyl group is -0.79.

The Taft's steric parameter Es is preferably -3.00 to -0.30, and more preferably -1.55 to -0.39.

The boric acid compound that has such a high bulkiness that at least one of Rs in the partial structures (I) has a Taft's steric parameter Es of -0.30 or less is unlikely to form cluster structures composed of the boric acid compound due to the steric hindrance, and thus exhibits high electrophilicity and attains an enhanced ratio of reaction with the active terminals. As a result, the polymer composition that is obtained can contain a high proportion of the boronic modified polymer (A). To further enhance the reaction ratio, it is preferable that all of Rs bonded to the oxygen atom in the partial structures (I) satisfy the above Es value.

The R satisfying the above Es value is preferably an n-propyl group, an isopropyl group, an n-butyl group, a sec-butyl group, an i-butyl group or a cyclohexyl group, more preferably an isopropyl group or an n-butyl group, and still more preferably an isopropyl group.

The boric acid compound is a boric acid compound that has reactivity with the active terminal of the terminal-active polymer (Z) obtained by the anionic polymerization. In particular, a boric acid ester represented by the formula (XII) below is preferable.

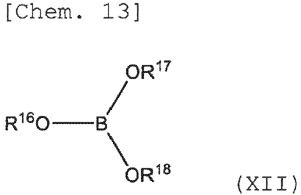

In the formula (XII), R¹⁶, R¹⁷ and R¹⁸ each denote a C1-C12 hydrocarbon group.

At least one of R¹⁶, R¹⁷ and R¹⁸ preferably has a Taft's steric parameter Es of -0.30 or less, more preferably -3.00 to -0.30, and still more preferably -1.55 to -0.39. In a preferred embodiment, all of R¹⁶, R¹⁷ and R¹⁸ satisfy the above Es value. At least one of R¹⁶, R¹⁷ and R¹⁸ is preferably an n-propyl group, an isopropyl group, an n-butyl group, a sec-butyl group, an i-butyl group or a cyclohexyl group, more preferably an isopropyl group or an n-butyl group, and still more preferably an isopropyl group. Furthermore, R¹⁶, R¹⁷ and R¹⁸ are each preferably an n-propyl group, an isopropyl group, an n-butyl group, a sec-butyl group, an i-butyl group or a cyclohexyl group, more preferably an isopropyl group or an n-butyl group, and still more preferably an isopropyl group.

Examples of the boric acid esters represented by the formula (XII) include tri-n-propyl borate ester, tri-n-butyl borate ester, triisopropyl borate ester, tri-sec-butyl borate ester, tri-i-butyl borate ester and tricyclohexyl borate ester. Among these, tri-n-propyl borate ester, tri-n-butyl borate ester and triisopropyl borate ester are preferable.

In the step (2), the boric acid compound is preferably used in an amount of 0.5 to 10 mol, more preferably 1 to 5 mol, per mol of the terminal-active polymer (Z).

The step (2) is preferably performed in such a manner that the boric acid compound is mixed together with a polar compound, and the mixture is reacted with the terminal-active polymer (Z).

Examples of the polar compounds include ether compounds such as dibutyl ether, tetrahydrofuran and ethylene glycol diethyl ether; tertiary amines such as tetramethylethylenediamine and trimethylamine; alkali metal alkoxides, and phosphine compounds. The polar compound is usually used in an amount of 0.01 to 1000 mol with respect to the boric acid compound used in the step (2). The addition of the polar compound can dissociate molecules of the boric acid compound that are associated together, thereby increasing the reactivity.

The temperature of the reaction of the terminal-active polymer (Z) and the boric acid compound in the step (2) is usually in the range of -80 to 150°C, preferably in the range of 0 to 100°C, and more preferably in the range of 10 to 90°C.

After the reaction of the terminal-active polymer (Z) with the boric acid compound in the step (2), a polymerization terminator may be further added to the terminal-active polymer (Z). The addition of the polymerization terminator can reliably suppress side reactions stemming from the active terminals of the terminal-active polymer (Z) that remain after the reaction with the boric acid compound. Examples of the polymerization terminators include alcohols such as methanol, ethanol, n-propanol and isopropanol.

The reaction mode of the step (2) may be either batchwise or continuous.

The polymer composition obtained by the production method of the present invention is recovered from the reaction product obtained in the step (2). The polymer composition may be recovered in any manner without limitation. When the reaction product obtained in the step (2) is a solution containing the polymer composition, for example, the polymer composition may be isolated and recovered by pouring the obtained solution into a poor solvent such as methanol to precipitate the polymer composition or by washing the polymer solution with water, followed by separation and drying.

The polymer composition obtained in the present invention (hereinafter, also written as the polymer composition (α)) may be used as a resin composition by being further combined with other components such as an additional polymer (β) other than the polymer composition (α). The additional polymer (β) may be a thermoplastic polymer (β1) or a curable polymer (β2).

Examples of the thermoplastic polymers (β1) include acrylic resins such as polymethyl methacrylate and (meth)acrylic acid ester polymers or copolymers; olefin resins such as polyethylene, ethylene-vinyl acetate copolymer, polypropylene, polybutene-1, poly-4-methylpentene-1 and polynorbornene; ethylene ionomers; styrene resins such as polystyrene, styrene-maleic anhydride copolymer, highimpact polystyrene, AS resins, ABS resins, AES resins, AAS resins, ACS resins and MBS resins; styrene-methyl methacrylate copolymer; styrene-methyl methacrylate-maleic anhydride copolymer; polyester resins such as polyethylene terephthalate, polybutylene terephthalate and polylactic acid; polyamides such as nylon 6, nylon 66 and polyamide elastomers; polycarbonate; polyvinyl chloride; polyvinylidene chloride; polyvinyl acetate; partially saponified polyvinyl alcohols; polyvinyl alcohol; ethylene-vinyl alcohol copolymer; polyacetal; polyvinylidene fluoride; polyurethanes; modified polyphenylene ethers; polyphenylene sulfide; silicone rubber-modified resins; acrylic rubbers; silicone rubbers; styrene-based thermoplastic elastomers such as SEPS, SEBS and SIS; and olefin rubbers such as IR, EPR and EPDM. The thermoplastic polymers (β1) may be used singly, or two or more may be used in combination.

Examples of the curable polymers (β2) include epoxy resins, unsaturated polyester resins, epoxy (meth)acrylate resins, ester (meth)acrylate resins, phenol resins, urea resins, melamine resins, thermosetting urethane resins, silicon resins, imide resins, furan resins, alkyd resins, allyl resins and diallyl phthalate resins. Among these, epoxy resins, unsaturated polyester resins and epoxy (meth)acrylate resins are preferable from the points of view of availability and basic properties of cured products, and also for reasons such as air bubble releasability and because the polymer composition that is obtained gives cured products having further enhanced toughness. In particular, epoxy resins and unsaturated polyester resins are more preferable, and epoxy resins are still more preferable. The curable polymers (β2) may be used singly, or two or more may be used in combination.

When the resin composition contains the polymer composition (α) and the additional polymer (β), the mass ratio (α)/(β) of the polymer composition (α) to the additional polymer (β) is preferably 50/50 to 99/1.

Furthermore, various additives may be added to the resin composition to such an extent that the advantageous effects of the present invention are not impaired. When, for example, the additional polymer (β) is a thermoplastic polymer (β1), examples of the additives that may be used include reinforcing agents or fillers such as calcium carbonate, silica, carbon black, glass fibers and clays, and plasticizers such as process oils, polyethylene glycol, glycerin and phthalic acid esters. Examples of the additives further include heat stabilizers, antioxidants, UV absorbers, colorants, pigments, lubricants and surfactants. Examples of the additives further include foaming agents. A polymer composition containing a thermoplastic polymer (β1) and a foaming agent can give foams.

When, for example, the additional polymer (β) is a curable polymer (β2), examples of the additives include curing agents, curing accelerators, known rubbers, thermoplastic elastomers, impact modifiers such as core-shell particles, fillers (for example, inorganic particles such as silica, talc, calcium carbonate and aluminum hydroxide), flame retardants, anti-foaming agents, pigments, dyes, antioxidants, weathering agents, lubricants and mold release agents.

The additional polymer (β) may be mixed in the polymer composition (α) of the present invention by a usual method for mixing polymer substances in accordance with factors such as the compositional ratio of the components.

When the additional polymer (β) is a thermoplastic polymer (β1), the resin composition may be prepared with a mixing device such as, for example, an extruder, a mixing roll, a Banbury mixer or a kneader. In particular, a preferred embodiment of the present invention resides in melt-kneading using the above mixing device.

When the additional polymer (β) is a curable polymer (β2), the resin composition may be prepared by, for example, sufficiently mixing the components with a device such as a mixer, and melt-kneading the mixture with a device such as a mixing roll or an extruder, followed by cooling and pulverization.

### Examples

Hereinbelow, the present invention will be described in greater detail by way of Examples, but the present invention is not limited to those Examples. In the following Examples and Comparative Examples, properties of polymer compositions were evaluated by the methods below.

### (1) Weight average molecular weights (Mw), number average molecular weights (Mn) and molecular weight distributions (Mw/Mn)

The weight average molecular weights (Mw), the number average molecular weights (Mn) and the molecular weight distributions (Mw/Mn) of a conjugated diene graft copolymer and of a polymer at a stage of the production were determined by gel permeation chromatography (GPC) relative to standard polystyrenes.
Device: GPC device "HLC-8220" manufactured by TOSOH CORPORATION
Separation columns: "TSKgel SuperMultipore HZ-M (column diameter = 4.6 mm, column length = 15 cm)" manufactured by TOSOH CORPORATION (Two columns were connected in series.) Eluent: Tetrahydrofuran
Eluent flow rate: 0.35 mL/min
Column temperature: 40°C
Detection method: Differential refractive index (RI) Injection volume: 10 µl
Concentration: 1 mg/1 cc (conjugated diene graft copolymer/THF)

### (2) Vinyl contents and contents of styrene-derived structural units

The vinyl contents and the contents of styrene-derived structural units in a modified polymer and in a polymer at a stage of the production were calculated by ¹H-NMR. The spectra obtained were analyzed to calculate the vinyl content from the area ratio of the double bond signal assigned to structural units derived from the vinylated conjugated diene to the double bond signal assigned to structural units derived from the non-vinylated conjugated diene, and also to calculate the content of styrene-derived structural units from the area ratio of the aromatic ring signal assigned to styrene-derived structural units to the double bond signal assigned to structural units derived from the conjugated diene.
Device: Nuclear magnetic resonance device "JNM-ECX 400" manufactured by JEOL Ltd.
Solvent: Deuterated chloroform
Measurement temperature: 50°C
Number of scans: 1024

### (3) Mass proportions (mass%) of boronic modified polymer (A) and borinic modified polymer (B)

Based on the knowledge that the borinic modified polymer (B) has a higher molecular weight than the boronic modified polymer (A), the mass proportions (mass%) of the polymers (A) and (B) were calculated from the area ratio obtained by gel permeation chromatography (GPC). If the resolution of peaks was low, the mass proportions (mass%) were calculated from the area ratio by separating the peaks assuming that the peaks would obey the Gaussian distribution.

### (4) Ratio (mass%) of introduction of boron-containing functional groups

The polymer composition was water-washed to remove the unreacted boric acid compound and was decomposed with a microwave decomposition device. The content of boron atoms was measured by ICP emission spectrometry, and the component ratio of the polymer components was determined by gel permeation chromatography (GPC), thereby calculating the ratio of introduction of boron-containing functional groups. The ratio of introduction of boron-containing functional groups is determined with respect to the mass of the polymer composition cleaned of the unmodified product, that is, with respect to the sum of the boronic modified polymer (A) and the borinic modified polymer (B).

### <Microwave decomposition>

Device: ETHOS UP manufactured by Milestone General K.K.
Solvent: Nitric acid
Decomposition temperature: 210°C
Decomposition time: 30 minutes

### <ICP emission spectrometry>

Device: iCAP 7400 Duo manufactured by Thermo Fisher Scientific

### (5) Contents of boronic modified polymer (A) and borinic modified polymer (B) in polymer composition

The contents were calculated based on the mass proportions of the boronic modified polymer (A) and the borinic modified polymer (B), and the value of the ratio of introduction of boron-containing functional groups described above.

### (6) Reactivity

The modified polymers were dissolved into a deuterated solvent, and catechol was added in a molar amount equal to the moles of the polymer initiation terminals. The reactivity of the polymers was evaluated in accordance with the criteria below based on the ¹H-NMR signal change. The amount of the polymer initiation terminals had been calculated by ¹H-NMR from the integral ratio of the alkyl group derived from the alkyllithium, and the integral ratio of the double bond signal assigned to the conjugated dienederived structural units.
A: Amount of catechol with signal shift: 70 mol% or more
B: Amount of catechol with signal shift: 50 mol% or more and less than 70 mol%
C: Amount of catechol with signal shift: 25 mol% or more and less than 50 mol%
D: Amount of catechol with signal shift: less than 25 mol%

### (7) Heat resistance

The heat resistance of the modified polymers was evaluated by visually inspecting for any change in appearance upon heating. The modified polymers were applied to a slide glass and were heated in the air at 100°C for 12 hours. The appearance was then checked to evaluate the heat resistance in accordance with the following criteria.
A: No change in appearance
B: Gelled or yellowed

### [Example 1]

### (Step (1))

A thoroughly dried 5 L autoclave was purged with nitrogen and was loaded with 1200 g of cyclohexane and 54.0 g of sec-butyllithium (10.5 mass% cyclohexane solution). The temperature was raised to 50°C. Subsequently, 1300 g of butadiene was sequentially added at 10 ml/min while performing stirring and while controlling the polymerization temperature at 50°C. Heating was performed until 1 hour after the addition of butadiene, thereby completing the polymerization.

### (Step (2))

To the polymerization solution obtained in the step (1), 16.6 g of triisopropyl borate was added to introduce boronic acid to the polymerization terminals. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (1) including a boronic modified polymer (A1) and a borinic modified polymer (B1). Properties of the polymer composition (1) obtained are described in Table 2.

### [Example 2]

### (Step (1))

A thoroughly dried 5 L autoclave was purged with nitrogen and was loaded with 1200 g of cyclohexane, 54.0 g of sec-butyllithium (10.5 mass% cyclohexane solution) and 2.06 g of tetramethylethylenediamine (TMEDA). The temperature was raised to 50°C. Subsequently, 1300 g of butadiene was sequentially added at 10 ml/min while performing stirring and while controlling the polymerization temperature at 50°C. Heating was performed until 1 hour after the addition of butadiene, thereby completing the polymerization.

### (Step (2))

To the polymerization solution obtained in the step (1), 16.6 g of triisopropyl borate was added to introduce boronic acid to the polymerization terminals. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (2) including a boronic modified polymer (A2) and a borinic modified polymer (B2). Properties of the polymer composition (2) obtained are described in Table 2.

### [Example 3]

### (Step (1))

A thoroughly dried 5 L autoclave was purged with nitrogen and was loaded with 1200 g of cyclohexane and 54.0 g of sec-butyllithium (10.5 mass% cyclohexane solution). The temperature was raised to 50°C. Subsequently, 1300 g of butadiene was sequentially added at 10 ml/min while performing stirring and while controlling the polymerization temperature at 50°C. Heating was performed until 1 hour after the addition of butadiene, thereby completing the polymerization.

### (Step (2))

To the polymerization solution obtained in the step (1), 2.06 g of TMEDA was added and subsequently 16.6 g of triisopropyl borate was added to introduce boronic acid to the polymerization terminals. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (3) including a boronic modified polymer (A3) and a borinic modified polymer (B3). Properties of the polymer composition (3) obtained are described in Table 2.

### [Examples 4 and 6]

Polymer compositions (4) and (6) of a boronic modified polymer and a borinic modified polymer were obtained in the same manner as in Example 3, except that the types and the amounts of the compounds added in the steps were changed as described in Table 1. Properties of the polymer compositions (4) and (6) obtained are described in Table 2.

### [Examples 5 and 7]

Polymer compositions (5) and (7) of a boronic modified polymer and a borinic modified polymer were obtained in the same manner as in Example 1, except that the types and the amounts of the compounds added in the steps were changed as described in Table 1. Properties of the polymer compositions (5) and (7) obtained are described in Table 2.

### [Example 8]

### (Step (1))

A thoroughly dried 5 L autoclave was purged with nitrogen and was loaded with 1200 g of cyclohexane and 54.0 g of sec-butyllithium (10.5 mass% cyclohexane solution). The temperature was raised to 50°C. Subsequently, 1640 g of isoprene was sequentially added at 10 ml/min while performing stirring and while controlling the polymerization temperature at 50°C. Heating was performed until 1 hour after the addition of isoprene, thereby completing the polymerization.

### (Step (2))

To the polymerization solution obtained in the step (1), a mixture of 2.06 g of TMEDA and 16.6 g of triisopropyl borate was added to introduce boronic acid to the polymerization terminals. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (8) including a boronic modified polymer (A8) and a borinic modified polymer (B8). Properties of the polymer composition (8) obtained are described in Table 2.

### [Example 9]

### (Step (1))

A thoroughly dried 5 L autoclave was purged with nitrogen and was loaded with 1300 g of cyclohexane, 54.0 g of sec-butyllithium (10.5 mass% cyclohexane solution) and 8.0 g of tetrahydrofuran. The temperature was raised to 50°C. Subsequently, a monomer mixture solution of 1000 g of butadiene and 377 g of isoprene was sequentially added and polymerization was performed for 1 hour while performing stirring and while controlling the polymerization temperature at 50°C.

### (Step (2))

To the polymerization solution obtained in the step (1), a mixture of 2.06 g of TMEDA and 16.6 g of triisopropyl borate was added to introduce boronic acid to the polymerization terminals. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (9) including a boronic modified polymer (A9) and a borinic modified polymer (B9). Properties of the polymer composition (9) obtained are described in Table 2.

### [Example 10]

### (Step (1))

A thoroughly dried 5 L autoclave was purged with nitrogen and was loaded with 1300 g of cyclohexane and 54.0 g of sec-butyllithium (10.5 mass% cyclohexane solution). The temperature was raised to 50°C. Subsequently, 580 g of styrene was added and polymerized while performing stirring and while controlling the polymerization temperature at 50°C. Next, 8.0 g of tetrahydrofuran was added, and 1000 g of butadiene was sequentially added at 10 ml/min. Heating was performed until 1 hour after the addition of butadiene, thereby completing the polymerization.

### (Step (2))

To the polymerization solution obtained in the step (1), a mixture of 2.06 g of TMEDA and 16.6 g of triisopropyl borate was added to introduce boronic acid to the polymerization terminals. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (10) including a boronic modified polymer (A10) and a borinic modified polymer (B10) (a boronic modified conjugated diene block copolymer (A10) and a borinic modified conjugated diene block copolymer (B10)). Properties of the polymer composition (10) obtained are described in Table 2.

### [Comparative Examples 1 and 2]

Polymer compositions (11) and (12) including a boronic modified polymer and a borinic modified polymer were obtained in the same manner as in Example 1, except that the types and the amounts of the compounds added in the steps were changed as described in Table 1. Properties of the polymer compositions (11) and (12) obtained are described in Table 2.

### [Comparative Example 3]

### (Step (1))

A thoroughly dried 5 L autoclave was purged with nitrogen and was loaded with 1200 g of cyclohexane and 54.0 g of sec-butyllithium (10.5 mass% cyclohexane solution). The temperature was raised to 50°C. Subsequently, 1300 g of butadiene was sequentially added at 10 ml/min. Heating was performed until 1 hour after the addition of butadiene, thereby completing the polymerization.

### (Step (2))

14.2 g of methanol was added to the polymerization solution obtained in the step (1) to terminate the polymerization. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (13) including a conjugated diene polymer (13). Properties of the polymer composition (13) obtained are described in Table 2.

### [Comparative Example 4]

### (Step (1))

A thoroughly dried 5 L autoclave was purged with nitrogen and was loaded with 1200 g of cyclohexane, 54.0 g of sec-butyllithium (10.5 mass% cyclohexane solution) and 3.1 g of 2,2-ditetrahydrofurylpropane. The temperature was raised to 50°C. Subsequently, 1300 g of butadiene was sequentially added at 10 ml/min while performing stirring and while controlling the polymerization temperature at 50°C. Heating was performed until 1 hour after the addition of butadiene, thereby completing the polymerization.

### (Step (2))

To the polymerization solution obtained in the step (1), 27.6 g of phenylboronic anhydride was added to introduce borinic acid to the polymerization terminals. Ion-exchanged water was added to the resultant polymer solution, and the polymer solution was washed by stirring. After the mixture had separated into a polymer solution phase and an aqueous phase, the polymer solution phase was recovered and was dried under reduced pressure at 90°C for 12 hours to give a polymer composition (14) including a borinic modified polymer (B14). Properties of the polymer composition (14) obtained are described in Table 2.

**[Table 1]**

| Unit: g | | Example | | | | |
|---|---|---|---|---|---|---|
| | | 1 | 2 | 3 | 4 | 5 |
| Conjugated diene polymer | | (1) | (2) | (3) | (4) | (5) |
| Step (1) | Cyclohexane | 1200 | 1200 | 1200 | 1200 | 1200 |
| | sec-Butyllithium | 54.0 | 54.0 | 54.0 | 160.0 | 54.0 |
| | Styrene | - | - | - | - | - |
| | Tetramethylethylenediamine | - | 2.06 | - | - | - |
| | Tetrahydrofuran | - | - | - | - | - |
| | 2,2-Ditetrahydrofurylpropane | - | - | - | - | - |
| | Butadiene | 1300 | 1300 | 1300 | 800 | 1300 |
| | Isoprene | - | - | - | - | - |
| Step (2) | Triisopropyl borate | 16.6 | 16.6 | 16.6 | 49.3 | - |
| | Tributyl borate | - | - | - | - | 20.4 |
| | Tri-n-propyl borate | - | - | - | - | - |
| | Trimethyl borate | - | - | - | - | - |
| | Triethyl borate | - | - | - | - | - |
| | Phenylboronic anhydride | - | - | - | - | - |
| | Tetramethylethylenediamine | - | - | 2.06 | 6.1 | - |

**Table 1 (continued)**

| Unit: g | | Example | | | | |
|---|---|---|---|---|---|---|
| | | 6 | 7 | 8 | 9 | 10 |
| Conjugated diene polymer | | (6) | (7) | (8) | (9) | (10) |
| Step (1) | Cyclohexane | 1200 | 1200 | 1200 | 1300 | 1300 |
| | sec-Butyllithium | 54.0 | 54.0 | 54.0 | 54.0 | 54.0 |
| | Styrene | - | - | - | - | 580 |
| | Tetramethylethylenediamine | - | - | - | - | - |
| | Tetrahydrofuran | - | - | - | 8.0 | 8.0 |
| | 2,2-Ditetrahydrofurylpropane | - | - | - | - | - |
| | Butadiene | 1300 | 1300 | - | 1000 | 1000 |
| | Isoprene | - | - | 1640 | 377 | - |
| Step (2) | Triisopropyl borate | - | - | 16.6 | 16.6 | 16.6 |
| | Tributyl borate | 16.6 | - | - | - | - |
| | Tri-n-propyl borate | - | 16.6 | - | - | - |
| | Trimethyl borate | - | - | - | - | - |
| | Triethyl borate | - | - | - | - | - |
| | Phenylboronic anhydride | - | - | - | - | - |
| | Tetramethylethylenediamine | 2.06 | - | 2.06 | 2.06 | 2.06 |

**Table 1 (continued)**

| Unit: g | | Comparative Example | | | |
|---|---|---|---|---|---|
| | | 1 | 2 | 3 | 4 |
| Conjugated diene polymer | | (11) | (12) | (13) | (14) |
| Step (1) | Cyclohexane | 1200 | 1200 | 1200 | 1200 |
| | sec-Butyllithium | 54.0 | 54.0 | 54.0 | 54.0 |
| | Styrene | - | - | - | - |
| | Tetramethylethylenediamine | - | - | - | - |
| | Tetrahydrofuran | - | - | - | - |
| | 2,2-Ditetrahydrofurylpropane | - | - | - | 3.1 |
| | Butadiene | 1300 | 1300 | 1300 | 1300 |
| | Isoprene | - | - | - | - |
| Step (2) | Triisopropyl borate | - | - | - | - |
| | Tributyl borate | - | - | - | - |
| | Tri-n-propyl borate | - | - | - | - |
| | Trimethyl borate | 9.2 | - | - | - |
| | Triethyl borate | - | 12.9 | - | - |
| | Phenylboronic anhydride | - | - | - | 27.6 |
| | Tetramethylethylenediamine | - | - | - | - |

Properties of the polymer compositions obtained in Examples 1 to 10 and Comparative Examples 1 to 4 are described in Table 2.

**[Table 2]**

| | | Ex. 1 | | Ex. 2 | | Ex. 3 | | Ex. 4 | | Ex. 5 | |
|---|---|---|---|---|---|---|---|---|---|---|---|
| Polymer composition | | 1 | | 2 | | 3 | | 4 | | 5 | |
| Polymer | | (A1) | (B1) | (A2) | (B2) | (A3) | (B3) | (A4) | (B4) | (A5) | (B5) |
| Monomer | | Butadiene | | Butadiene | | Butadiene | | Butadiene | | Butadiene | |
| Weight average molecular weight | | 29,000 | 59,000 | 28,000 | 57,000 | 29,000 | 60,000 | 6,000 | 12,000 | 29,000 | 59,000 |
| Mw/Mn | | 1.05 | 1.05 | 1.04 | 1.04 | 1.04 | 1.03 | 1.04 | 1.02 | 1.04 | 1.03 |
| Vinyl content (mol%) | | 9 | 9 | 43 | 43 | 10 | 10 | 9 | 9 | 10 | 10 |
| R | | Isopropyl | | Isopropyl | | Isopropyl | | Isopropyl | | n-Butyl | |
| Es (steric parameter) | | -0.47 | | -0.47 | | -0.47 | | -0.47 | | -0.39 | |
| Mass proportions of polymers (A) and (B) (mass%) | Polymer (A) | 96 | - | 98 | - | 97 | - | 97 | - | 93 | - |
| | Polymer (B) | - | 4 | - | 2 | - | 3 | - | 3 | - | 7 |
| Boron-containing functional group introduction ratio (mass%) | | 82 | | 90 | | 98 | | 95 | | 73 | |
| Content of polymer (A) in polymer composition (mass%) | | 79 | | 88 | | 95 | | 92 | | 68 | |
| Content of polymer (B) in polymer composition (mass%) | | 3 | | 2 | | 3 | | 3 | | 5 | |
| Reactivity | | A | | A | | A | | A | | A | |
| Heat resistance | | A | | A | | A | | A | | A | |

**Table 2 (continued)**

| | | Ex. 6 | | Ex. 7 | | Ex. 8 | | Ex. 9 | | Ex. 10 | |
|---|---|---|---|---|---|---|---|---|---|---|---|
| Polymer composition | | 6 | | 7 | | 8 | | 9 | | 10 | |
| Polymer | | (A6) | (B6) | (A7) | (B7) | (A8) | (B8) | (A9) | (B9) | (A10) | (B10) |
| Monomer | | Butadiene | | Butadiene | | Isoprene | | Butadiene/Isoprene | | Butadiene/Styrene | |
| Weight average molecular weight | | 30,000 | 62,000 | 30,000 | 62,000 | 30,000 | 61,000 | 29,000 | 60,000 | 30,000 | 60,000 |
| Mw/Mn | | 1.06 | 1.04 | 1.05 | 1.04 | 1.05 | 1.03 | 1.05 | 1.05 | 1.06 | 1.03 |
| Vinyl content (mol%) | | 10 | 10 | 10 | 10 | 8 | 8 | 40 | 40 | 38 | 38 |
| R | | n-Butyl | | n-Propyl | | Isopropyl | | Isopropyl | | Isopropyl | |
| Es (steric parameter) | | -0.39 | | -0.36 | | -0.47 | | -0.47 | | -0.47 | |
| Mass proportions of polymers (A) and (B) (mass%) | Polymer (A) | 96 | - | 88 | - | 86 | | 87 | | 89 | - |
| | Polymer (B) | - | 4 | - | 12 | - | 14 | - | 13 | - | 11 |
| Boron-containing functional group introduction ratio (mass%) | | 79 | | 68 | | 95 | | 95 | | 92 | |
| Content of polymer (A) in polymer composition (mass%) | | 76 | | 60 | | 82 | | 83 | | 82 | |
| Content of polymer (B) in polymer composition (mass%) | | 3 | | 8 | | 13 | | 12 | | 10 | |
| Reactivity | | A | | A | | A | | A | | A | |
| Heat resistance | | A | | A | | A | | A | | A | |

**Table 2 (continued)**

| | | Comp. Ex. 1 | | Comp. Ex. 2 | | Comp. Ex. 3 | Comp. Ex. 4 | |
|---|---|---|---|---|---|---|---|---|
| Polymer composition | | 11 | | 12 | | 13 | 14 | |
| Polymer | | (A11) | (B11) | (A12) | (B12) | - | - | (B14) |
| Monomer | | Butadiene | | Butadiene | | Butadiene | - | Butadiene |
| Weight average molecular weight | | 30,000 | 62,000 | 29,000 | 58,000 | 30,000 | - | 60,000 |
| Mw/Mn | | 1.06 | 1.06 | 1.06 | 1.04 | 1.05 | - | 1.05 |
| Vinyl content (mol%) | | 10 | 10 | 7 | 7 | 7 | - | 70 |
| R | | Methyl | | Ethyl | | - | - | - |
| Es (steric parameter) | | 0 | | -0.07 | | - | - | - |
| Mass proportions of polymers (A) and (B) (mass%) | Polymer (A) | 95 | - | 82 | - | 0 | 0 | - |
| | Polymer (B) | - | 5 | - | 18 | 0 | - | 100 |
| Boron-containing functional group introduction ratio (mass%) | | 21 | | 56 | | 0 | 86 | |
| Content of polymer (A) in polymer composition (mass%) | | 20 | | 46 | | 0 | 0 | |
| Content of polymer (B) in polymer composition (mass%) | | 1 | | 10 | | 0 | 86 | |
| Reactivity | | C | | B | | D | A | |
| Heat resistance | | A | | A | | A | B | |

In Examples 1 to 10, the modified polymers were obtained by the reaction involving a boric acid compound having a substituent with a Taft's steric parameter Es of -0.30 or less. As shown in Table 2, these modified polymers attained a high functional group introduction ratio and successfully satisfied the reactivity with polar functional groups and the heat resistance at the same time. In contrast, Comparative Examples 1 and 2 in which the reaction involved a boric acid compound having a substituent with a Taft's steric parameter Es of more than -0.30 resulted in a low functional group introduction ratio and poor reactivity. Furthermore, Comparative Example 3 in which no boric acid compounds were added to the reaction failed to cause reaction with polar functional groups. The polymer composition of Comparative Example 4, which contained only a borinic acid compound, exhibited excellent reactivity but was poor in heat resistance, and it was difficult to achieve reactivity and heat resistance at the same time.

### Industrial Applicability

The production method of the present invention can produce in a high yield a boronic modified polymer (A) suited for purposes such as modification of polar materials and dispersing of inorganic materials. Furthermore, the polymer composition obtained in the present invention that includes a boronic modified polymer and a borinic modified polymer in specific proportions concurrently satisfies high reactivity with polar functional groups and excellent storage stability. Thus, the polymer composition, and a resin composition including the polymers may be effectively used in a wide range of fields such as automobile interior and exterior parts, electric/electronic parts, packaging materials, sporting items, daily miscellaneous goods, laminating materials, elastic materials, various rubber products, medical items, various adhesives and various paint primers.

## Claims

1. A method for producing a polymer composition including modified polymers having a boron-containing functional group, the method comprising a step (1) of anionically polymerizing at least one monomer selected from the group consisting of conjugated dienes and aromatic vinyl compounds in the presence of an active metal or an active metal compound capable of catalyzing anionic polymerization to produce a terminal-active polymer (Z), and a step (2) of reacting the terminal-active polymer (Z) obtained in the step (1) with a boric acid compound having at least two or more partial structures represented by the formula (I) below and having a Taft's steric parameter Es of -0.30 or less with respect to at least one of Rs bonded to the oxygen atom in the partial structures,
B-O-R (I)
(in the formula (I), B denotes a boron atom, O denotes an oxygen atom, and R denotes an organic group).

2. The method for producing a polymer composition according to claim 1, wherein the step (2) comprises mixing a polar compound with the boric acid compound, and adding the mixture to the terminal-active polymer (Z) followed by reaction.

3. A polymer composition comprising 55 to 99 mass% of at least one type of a boronic modified polymer (A) selected from the group consisting of modified polymers containing a boronic acid group and represented by the formula (II) below, modified polymers containing a boronic acid ester group and represented by the formula (III) below, and modified polymers containing a boronic acid salt group and represented by the formula (IV) below; and 1 to 45 mass% of at least one type of a borinic modified polymer (B) selected from the group consisting of modified polymers containing a borinic acid group and represented by the formula (V) or (VI) below, modified polymers containing a borinic acid ester group and represented by the formula (VII) or (VIII) below, and modified polymers containing a borinic acid salt group and represented by the formula (IX) or (X) below, 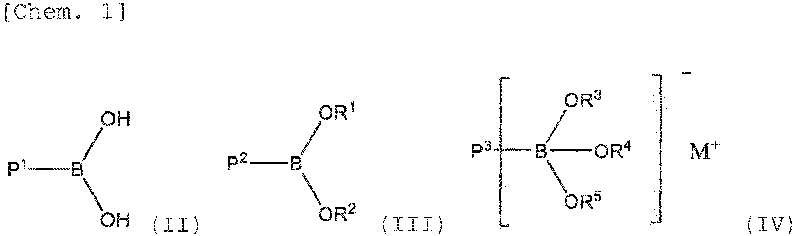
(wherein P¹, P² and P³ each denote a polymer chain containing at least one monomer unit selected from the group consisting of conjugated diene units and aromatic vinyl compound units,
R¹ and R² each independently denote a hydrogen atom or a C1-C12 alkyl group, and at least one of R¹ and R² is a C1-C12 alkyl group, or R¹ and R² are bonded to each other to form a C2-C24 alkylene chain,
R³, R⁴ and R⁵ each independently denote a hydrogen atom, a C1-C12 alkyl group, or a polymer chain containing at least one monomer unit selected from the group consisting of conjugated diene units and aromatic vinyl compound units, and at least one of R³, R⁴ and R⁵ is a C1-C12 alkyl group, or a polymer chain containing at least one monomer unit selected from the group consisting of conjugated diene units and aromatic vinyl compound units, or R³ and R⁴, R³ and R⁵, or R⁴ and R⁵ are optionally bonded to each other to form a C2-C24 alkylene chain, or
R³, R⁴ and R⁵ are optionally bonded to one another to form a C3-C36 trivalent saturated hydrocarbon chain, and
M denotes one alkali metal or 1/2 alkaline earth metal) 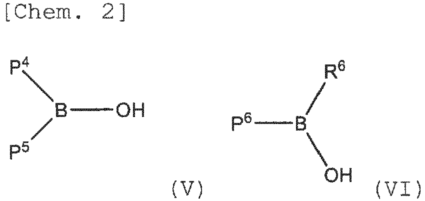 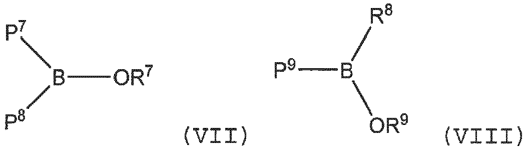 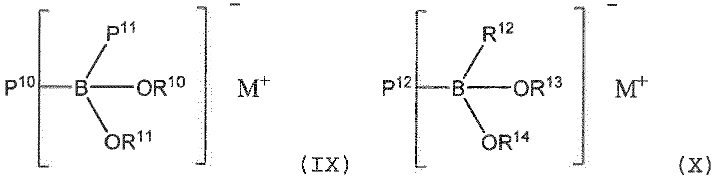
(wherein P⁴, P⁵, P⁶, P⁷, P⁸, P⁹, P¹⁰, P¹¹ and P¹² each denote a polymer chain containing at least one monomer unit selected from the group consisting of conjugated diene units and aromatic vinyl compound units,
R⁶, R⁷, R⁸ and R⁹ each independently denote a C1-C12 alkyl group,
R¹⁰ and R¹¹ are each independently a hydrogen atom or a C1-C12 alkyl group, and at least one of R¹⁰ and R¹¹ is a C1-C12 alkyl group, or R¹⁰ and R¹¹ are bonded to each other to form a C2-C24 alkylene chain,
R¹² denotes a C1-C12 alkyl group,
R¹³ and R¹⁴ are each independently a hydrogen atom or a C1-C12 alkyl group, and at least one of R¹³ and R¹⁴ is a C1-C12 alkyl group, or R¹³ and R¹⁴ are bonded to each other to form a C2-C24 alkylene chain, and
M denotes one alkali metal or 1/2 alkaline earth metal).

## Patentansprüche

1. Verfahren zur Herstellung einer Polymerzusammensetzung, enthaltend modifizierte Polymere mit einer borhaltigen funktionellen Gruppe, wobei das Verfahren einen Schritt (1) des anionischen Polymerisierens mindestens eines Monomers, ausgewählt aus der Gruppe, bestehend aus konjugierten Dienen und aromatischen Vinylverbindungen, in der Gegenwart von einem aktiven Metall oder einer aktiven Metallverbindung, fähig eine anionische Polymerisation zu katalysieren, um ein terminal-aktives Polymer (Z) zu erzeugen, und einen Schritt (2) des Umsetzens des in dem Schritt (1) erhaltenen terminal-aktiven Polymers (Z) mit einer Borsäureverbindung mit mindestens zwei oder mehr Teilstrukturen, dargestellt durch die nachstehende Formel (I) und mit einem Taft'schen sterischen Parameter Es von -0,30 oder weniger in Bezug auf mindestens eines von Rs, gebunden an das Sauerstoffatom in den Teilstrukturen, umfasst,
B-O-R (I)
(wobei in der Formel (I) B ein Boratom bezeichnet, O ein Sauerstoffatom bezeichnet und R eine organische Gruppe bezeichnet).

2. Verfahren zur Herstellung einer Polymerzusammensetzung nach Anspruch 1, wobei der Schritt (2) das Mischen einer polaren Verbindung mit der Borsäureverbindung und das Zugeben des Gemisches zu dem terminal-aktiven Polymer (Z), gefolgt von einer Reaktion, umfasst.

3. Polymerzusammensetzung, umfassend 55 bis 99 Massen% von mindestens einer Art eines boronmodifizierten Polymers (A), ausgewählt aus der Gruppe, bestehend aus modifizierten Polymeren, enthaltend eine Boronsäuregruppe und dargestellt durch die nachstehende Formel (II), modifizierten Polymeren, enthaltend eine Boronsäureestergruppe und dargestellt durch die nachstehende Formel (III), und modifizierten Polymeren, enthaltend eine Boronsäuresalzgruppe und dargestellt durch die nachstehende Formel (IV); und 1 bis 45 Massen% von mindestens einer Art eines borinmodifizierten Polymers (B), ausgewählt aus der Gruppe, bestehend aus modifizierten Polymeren, enthaltend eine Borinsäuregruppe und dargestellt durch die nachstehende Formel (V) oder (VI), modifizierten Polymeren, enthaltend eine Borinsäureestergruppe und dargestellt durch die nachstehende Formel (VII) oder (VIII), und modifizierten Polymeren, enthaltend eine Borinsäuresalzgruppe und dargestellt durch die nachstehende Formel (IX) oder (X), 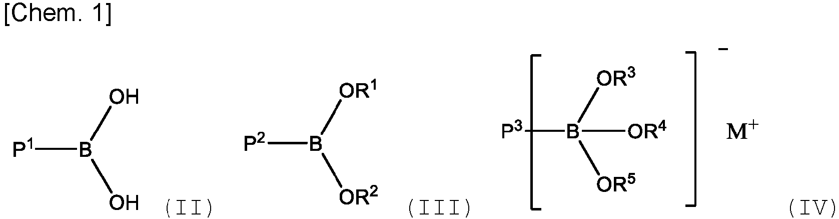
(wobei P¹, P² und P³ jeweils eine Polymerkette, enthaltend mindestens eine Monomereinheit, ausgewählt aus der Gruppe, bestehend aus konjugierten Dieneinheiten und aromatischen Vinylverbindungseinheiten, bezeichnen,
R¹ und R² jeweils unabhängig ein Wasserstoffatom oder eine C1-C12-Alkylgruppe bezeichnen, und mindestens eines von R¹ und R² eine C1-C12-Alkylgruppe ist, oder R¹ und R² aneinander gebunden sind, um eine C2-C24-Alkylenkette zu bilden,
R³, R⁴ und R⁵ jeweils unabhängig ein Wasserstoffatom, eine C1-C12-Alkylgruppe oder eine Polymerkette, enthaltend mindestens eine Monomereinheit, ausgewählt aus der Gruppe, bestehend aus konjugierten Dieneinheiten und aromatischen Vinylverbindungseinheiten, bezeichnen, und mindestens eines von R³, R⁴ und R⁵ eine C1-C12-Alkylgruppe oder eine Polymerkette, enthaltend mindestens eine Monomereinheit, ausgewählt aus der Gruppe, bestehend aus konjugierten Dieneinheiten und aromatischen Vinylverbindungseinheiten, ist, oder R³ und R⁴, R³ und R⁵ oder R⁴ und R⁵ gegebenenfalls aneinander gebunden sind, um eine C2-C24-Alkylenkette zu bilden, oder
R³, R⁴ und R⁵ gegebenenfalls aneinander gebunden sind, um eine C3-C36 dreiwertige gesättigte Kohlenwasserstoffkette zu bilden, und
M ein Alkalimetall oder 1/2 Erdalkalimetall bezeichnet) 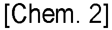 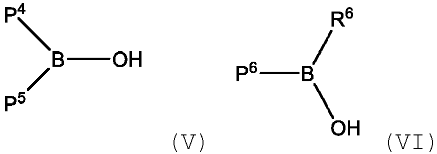 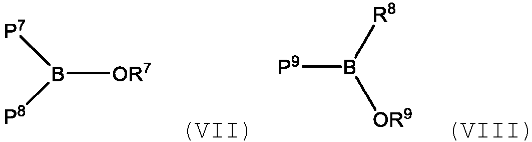 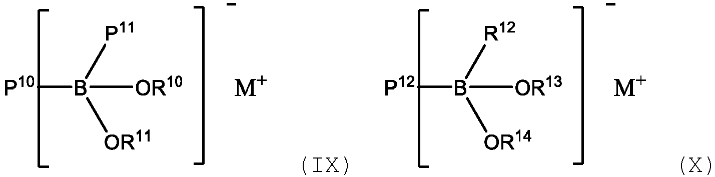
(wobei P⁴, P⁵, P⁶, P⁷, P⁸, P⁹, P¹⁰, P¹¹ und P¹² jeweils eine Polymerkette, enthaltend mindestens eine Monomereinheit, ausgewählt aus der Gruppe, bestehend aus konjugierten Dieneinheiten und aromatischen Vinylverbindungseinheiten, bezeichnen,
R⁶, R⁷, R⁸ und R⁹ jeweils unabhängig eine C1-C12-Alkylgruppe bezeichnen,
R¹⁰ und R¹¹ jeweils unabhängig ein Wasserstoffatom oder eine C1-C12-Alkylgruppe sind, und mindestens eines von R¹⁰ und R¹¹ eine C1-C12-Alkylgruppe ist, oder R¹⁰ und R¹¹ aneinander gebunden sind, um eine C2-C24-Alkylenkette zu bilden,
R¹² eine C1-C12-Alkylgruppe bezeichnet,
R¹³ und R¹⁴ jeweils unabhängig ein Wasserstoffatom oder eine C1-C12-Alkylgruppe sind, und mindestens eines von R¹³ und R¹⁴ eine C1-C12-Alkylgruppe ist, oder R¹³ und R¹⁴ aneinander gebunden sind, um eine C2-C24-Alkylenkette zu bilden, und
M ein Alkalimetall oder 1/2 Erdalkalimetall bezeichnet).

## Revendications

1. Procédé de production d'une composition de polymère incluant des polymères modifiés ayant un groupe fonctionnel contenant du bore, le procédé comprenant une étape (1) consistant à polymériser par voie anionique au moins un monomère sélectionné parmi le groupe constitué de diènes conjugués et de composés de vinyle aromatique en présence d'un métal actif ou d'un composé de métal actif capable de catalyser une polymérisation anionique pour produire un polymère à terminaison active (Z), et une étape (2) consistant à faire réagir le polymère à terminaison active (Z) obtenu à l'étape (1) avec un composé d'acide borique ayant au moins deux structures partielles ou plus représentées par la formule (I) ci-dessous et ayant un paramètre stérique de Taft Es de -0,30 ou moins par rapport à au moins un des R liés à l'atome d'oxygène dans les structures partielles,
B-O-R (I)
(dans la formule (I), B désigne un atome de bore, O désigne un atome d'oxygène et R désigne un groupe organique).

2. Procédé de production d'une composition de polymère selon la revendication 1, dans lequel l'étape (2) comprend mélanger un composé polaire au composé d'acide borique, et ajouter le mélange au polymère à terminaison active (Z) suivi d'une réaction.

3. Composition de polymère comprenant 55 à 99 % en masse d'au moins un type d'un polymère modifié boronique (A) sélectionné parmi le groupe constitué de polymères modifiés contenant un groupe acide boronique et représentés par la formule (II) ci-dessous, de polymères modifiés contenant un groupe ester d'acide boronique et représentés par la formule (III) ci-dessous et de polymères modifiés contenant un groupe sel d'acide boronique et représentés par la formule (IV) ci-dessous ; et 1 à 45 % en masse d'au moins un type d'un polymère modifié borinique (B) sélectionné parmi le groupe constitué de polymères modifiés contenant un groupe acide borinique et représentés par la formule (V) ou (VI) ci-dessous, de polymères modifiés contenant un groupe ester d'acide borinique et représentés par la formule (VII) ou (VIII) ci-dessous et de polymères modifiés contenant un groupe sel d'acide borinique et représentés par la formule (IX) ou (X) ci-dessous, 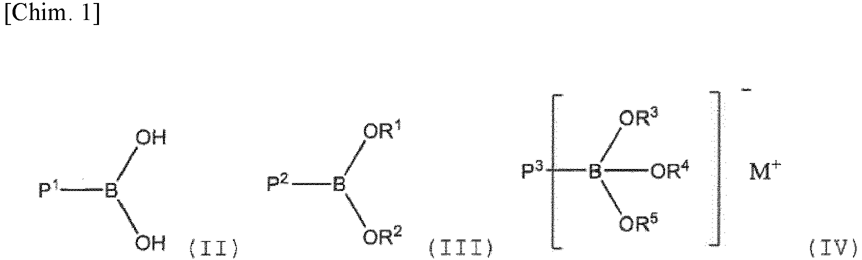
(dans lesquelles P¹, P² et P³ désignent chacun une chaîne polymère contenant au moins une unité monomère sélectionnée parmi le groupe constitué d'unités de diène conjugué et d'unités de composé de vinyle aromatique,
R¹ et R² désignent chacun indépendamment un atome d'hydrogène ou un groupe alkyle en C1-C12, et au moins un de R¹ et R² est un groupe alkyle en C1-C12, ou R¹ et R² sont liés l'un à l'autre pour former une chaîne alkylène en C2-C24,
R³, R⁴ et R⁵ désignent chacun indépendamment un atome d'hydrogène, un groupe alkyle en C1-C12 ou une chaîne polymère contenant au moins une unité monomère sélectionnée parmi le groupe constitué d'unités de diène conjugué et d'unités de composé de vinyle aromatique, et au moins un de R³, R⁴ et R⁵ est un groupe alkyle en C1-C12 ou une chaîne polymère contenant au moins une unité monomère sélectionnée parmi le groupe constitué d'unités de diène conjugué et d'unités de composé de vinyle aromatique, ou R³ et R⁴, R³ et R⁵ ou R⁴ et R⁵ sont en option liés l'un à l'autre pour former une chaîne alkylène en C2-C24, ou
R³, R⁴ et R⁵ sont en option liés l'un à l'autre pour former une chaîne d'hydrocarbure saturé trivalent en C3-C36, et
M désigne un métal alcalin ou 1/2 métal alcalino-terreux) 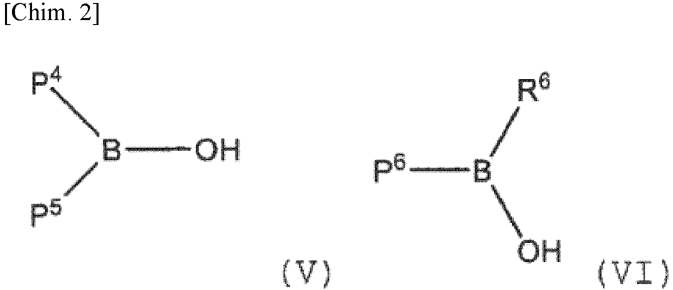 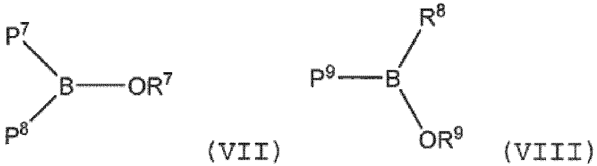 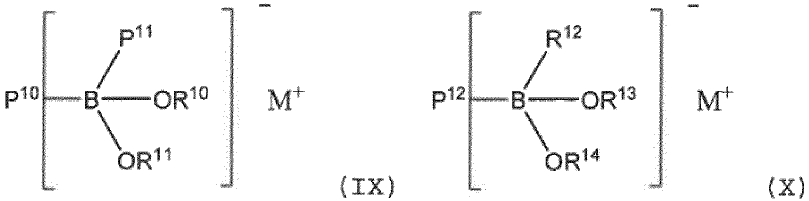
(dans lesquelles P⁴, P⁵, P⁶, P⁷, P⁸, P⁹, P¹⁰, P¹¹ et P¹² désignent chacun une chaîne polymère contenant au moins une unité monomère sélectionnée parmi le groupe constitué d'unités de diène conjugué et d'unités de composé de vinyle aromatique,
R⁶, R⁷, R⁸ et R⁹ désignent chacun indépendamment un groupe alkyle en C1-C12, R¹⁰ et R¹¹ sont chacun indépendamment un atome d'hydrogène ou un groupe alkyle en C1-C12, et au moins un de R¹⁰ et R¹¹ est un groupe alkyle en C1-C12, ou R¹⁰ et R¹¹ sont liés l'un à l'autre pour former une chaîne alkylène en C2-C24, R¹² désigne un groupe alkyle en C1-C12,
R¹³ et R¹⁴ sont chacun indépendamment un atome d'hydrogène ou un groupe alkyle en C1-C12, et au moins un de R¹³ et R¹⁴ est un groupe alkyle en C1-C12, ou R¹³ et R¹⁴ sont liés l'un à l'autre pour former une chaîne alkylène en C2-C24, et
M désigne un métal alcalin ou 1/2 métal alcalino-terreux).
